# EUROPÄISCHE PATENTSCHRIFT

(11) **EP 2 779 878 B1**
(45) Veröffentlichungstag und Bekanntmachung des Hinweises auf die Patenterteilung: **03.02.2016**
(21) Anmeldenummer: 12786949.3
(22) Anmeldetag: 08.11.2012
(51) Int. Cl.: A47J 31/40, A47J 31/36

(54) **KARTUSCHENAUFNAHME FÜR EINE BRÜHKAMMER EINES AUF BASIS VON FORMSTABILEN GETRÄNKEKARTUSCHEN ARBEITENDEN HEISSGETRÄNKEAUTOMATEN**
CARTRIDGE RECEPTACLE FOR A BREWING CHAMBER OF A HOT BEVERAGE MACHINE OPERATING ON THE BASIS OF DIMENSIONALLY STABLE BEVERAGE CARTRIDGES
LOGEMENT DE CARTOUCHE POUR UNE CHAMBRE D'INFUSION D'UN AUTOMATE À BOISSONS CHAUDES FONCTIONNANT À BASE DE CARTOUCHES À BOISSON DE FORME STABLE

(30) Priorität: 15.11.2011 DE 102011086420
(43) Veröffentlichungstag der Anmeldung: 24.09.2014
(73) Patentinhaber: BSH Hausgeräte GmbH, 81739 München (DE)
(72) Erfinder: FRITZ, Jürgen, 83349 Palling (DE); HÖGLAUER, Michael, 83246 Unterwössen (DE); STEFFI, Michael, 83250 Marquartstein (DE)
(86) Internationale Anmeldenummer: PCT/EP2012/072091
(87) Internationale Veröffentlichungsnummer: WO 2013/072240

(56) Entgegenhaltungen:
- DE-A1-102009 026 830
- DE-U1-202008 014 160

## Beschreibung

Die Erfindung betrifft eine Kartuschenaufnahme für eine Brühkammer eines auf Basis von formstabilen Getränkekartuschen arbeitenden Heißgetränkeautomaten, mit einem Kartuschenträger, einem Kartuschenhalter und einer Verriegelungseinrichtung zum Haltern der Getränkekartusche auf dem Kartuschenträger. Die Erfindung betrifft auch eine Brühkammer eines auf Basis von formstabilen Getränkekartuschen arbeitenden Heißgetränkeautomaten, umfassend eine Kartuschenaufnahme.

Heißgetränkeautomaten, d.h. Vorrichtungen zur Extraktion einer Substanz für die Herstellung eines, vorzugsweise heißen Getränks, sind im Stand der Technik bekannt. So offenbaren beispielsweise die DE 20 2008 014 160 U1 und die DE 10 2009 026 830 A1 Vorrichtungen zur Extraktion geschlossener Getränkekartuschen.

Die in den formstabilen, geschlossenen, aus Kunststoff, Metall oder aus Kunststoff und Metall bestehenden, in der Regel von einer Hartschale und einer auflaminierten Metall- oder Kunststofffolie gebildeten Kartuschen, enthaltene Substanz, ist entweder pulverförmig oder flüssig. Die Substanz ist beispielsweise gerösteter und gemahlener Kaffee, löslicher Kaffee, eine Mischung von gemahlenem Kaffee und löslichem Kaffee, Tee, ein Schokoladen- oder Milchprodukt, oder jede andere dehydratisierte verzehrbare Substanz.

Bei gattungsgemäßen Heißgetränkeautomaten wird zur Extraktion eines Getränkegrundstoffs zunächst eine Gertränkekartusche in eine Kartuschenaufnahme eingelegt, anschließend eine aus Basisplatte und Deckel bestehende und die Kartuschenaufnahme umschließende Brühkammer verriegelt, und schließlich die Kartusche, vorzugsweise mit heißem Wasser beaufschlagt. Dabei wird der Brühkammer, beispielsweise über die Basisplatte, und der angestochenen Kartusche, gegebenenfalls erhitztes Wasser bzw. Dampf zugeführt, das den in der Kartusche befindlichen Getränkegrundstoff durchströmt oder löst. Beim Durchströmen bzw. Lösen des Getränkegrundstoffs kann sich in der Gertränkekartusche ein, durchaus erwünschter Brühdruck von bis zu 10 bar aufbauen. Insbesondere bei der Extraktion von gemahlenem Kaffee ist ein hoher Druck vorteilhaft. Am Ende eines Extraktionszyklus wird von dem Heißgetränkeautomaten gegebenenfalls noch ein Dampfstoß und damit ein Dampfdruck erzeugt, um noch im Getränkegrundstoff vorhandenes Brühwasser auszutreiben. Dadurch wird ein Nachtropfen am Getränkeauslaß verhindert. Der Brühdruck während der Brühung, wie auch der am Ende des Zyklus erzeugte Dampfstoß, bedingen einen hohen Innendruck in der Getränkekartusche. Dies birgt die Gefahr, dass die verklebten, verschweißten oder gebördelten Getränkekartuschen an bestimmten Schwachstellen aufzuplatzen drohen.

Insbesondere, wenn der Brühkopf bzw. die Brühkammer während des Extraktionszyklus oder während des abschließenden Dampfstoßes in Folge einer Fehlbedienung geöffnet wird, kommt es zu einer ungehinderten Expansion und dadurch zum Aufplatzen der noch unter Druck stehenden Getränkekartusche. Dabei kann heißes Wasser und/oder heißer Getränkegrundstoff verspritzen.

Aufgabe der Erfindung ist es, einen gattungsgemäßen Heißgetränkeautomaten derart weiterzubilden, dass ein Aufplatzen, insbesondere in Folge einer Fehlbedienung, einer während eines Brühvorgangs oder während eines abschließenden Dampfstoßes unter Druck stehenden Getränkekartusche mit einfachen und kostengünstigen Mitteln vermieden wird.

Diese Aufgabe wird mit den Merkmalen des unabhängigen Anspruchs 1 gelöst. Vorteilhafte Aus- und Weiterbildungen, welche einzeln oder in Kombination miteinander eingesetzt werden können, sind Gegenstand der Unteransprüche.

Erfindungsgemäß ist eine Kartuschenaufnahme für eine Brühkammer eines auf Basis von formstabilen Getränkekartuschen arbeitenden Heißgetränkeautomaten mit einem Kartuschenträger, einem Kartuschenhalter und einer Verriegelungseinrichtung zum Haltern der Getränkekartusche in der Kartuschenaufnahme vorgesehen, die dadurch gekennzeichnet ist, dass die Kartuschenaufnahme ein Dämpfungsmittel aufweist, das geeignet ist, den durch einen Brüh- und/oder Dampfdruck in der Getränkekartusche erzeugten Innendruck auszugleichen.

Der Kartuschenhalter kann die Form einer Halbschelle haben, die mit der Hartschale einer Getränkekartusche in Anlage bringbar und am Kartuscheträger verriegelbar ist. Der Kartuschenhalter kann auch ringförmig ausgebildet und mit einem Rand, bevorzugt einem äußeren Rand einer Kartusche, in Anlage bringbar sein. Durch ein vollumfängliches Haltern der Kartusche auf dem Kartuscheträger wird ein Höchstmass an Sicherheit erreicht, und zudem ein punktuelles Aufplatzen oder ein Aufreißen, insbesondere von außen nach innen, der Getränkekartusche verhindert.

Erfindungsgemäß weist die Kartuschenaufnahme eine Verriegelungseinrichtung zum sicheren Haltern der Kartusche, vorzugsweise mittels eines Formschlusses, auf. Die Verriegelungseinrichtung kann beispielsweise eine Rastverbindung mit einer Rastnase am Kartuschenhalter und einer Hinterschneidung am Kartuschenträger sein.

Um die aus Basisplatte und Deckel bestehende Brühkammer bequem öffnen und schließen zu können, ist der Brühkammerdeckel an der Basisplatte oder mittel- oder unmittelbar am Heißgetränkeautomaten angelenkt und nach oben hin zu öffnen.

Um die Kartuschenaufnahme bequem öffnen und schließen zu können, ist der Kartuschenhalter vorzugsweise über eine Angel mittels einer Gabel mittel- oder unmittelbar am Kartuschenträger angelenkt und nach oben hin zu öffnen.

Die Kartuschenaufnahme kann mittel- oder unmittelbar an der Basisplatte oder am Heißgetränkeautomaten, vorzugsweise über eine Gabel, angelenkt sein. Die Anlenkung über eine Gabel ermöglich ein einfaches Entnehmen der Kartuschenaufnahme, beispielsweise um diese nach einer Brühung zu reinigen, oder um eine große Getränkekartusche außerhalb der Brühkammer einfacher entnehmen zu können. Die Kartuschenaufnahme kann alternativ oder zusätzlich auch über den Kartuscheträger lösbar an der Basisplatte der Brühkammer gehaltert werden.

Bevorzugt ist die Kartuschenaufnahme mittel- oder unmittelbar am Heißgetränkeautomaten lösbar angelenkt und zusätzlich lösbar an der Basisplatte, beispielsweise über eine Rastverbindung, gehaltert.

Eine zusätzliche Halterung der Kartuschenaufnahme an der Basisplatte des Brühkopfs hat den Vorteil, dass sich bei einem missbräuchlichen Öffnen der Brühkammer bzw. einem Öffnen der der Brühkammer in Folge einer Fehlbedienung, der im Inneren der Getränkekartusche herrschende Druck nicht über eine Expansion, d.h. über ein Aufblähen der Kartuschenfolie durch eine im dem Kartuschenträger ausgebildete Aussparung, beispielsweise ein Lesefenster, hindurch abbauen kann. Auf der Kartuschenfolie, mit der eine Getränkekartusche verschlossen sein kann, und die in der Regel auf dem Kartuschenträger aufliegt, ist nämlich gegebenenfalls ein Barcode aufgedruckt, der für ein Barcode-Lesegerät lesbar sein muss. Zudem wird gegebenenfalls über die Folie die Kartusche angestochen und mit Brühwasser versorgt. Daher ist zumindest im Bereich des Barcodes ein Lesefenster in dem Kartuschenträger vorzusehen.

Erfindungsgemäß weist die Kartuschenaufnahme ein Dämpfungsmittel auf, das geeignet ist, den durch einen Brüh- und/oder Dampfdruck in der Getränkekartusche erzeugten Innendruck auszugleichen. Das Dämpfungsmittel ist bevorzugt als elastisches Rückstellmittel ausgebildet, das einer in der Kartusche herrschenden Druckbelastung in einem bestimmten Umfang nachgibt und nach einem Druckausgleich wieder in seine ursprüngliche Gestalt zurückkehrt. Demgemäß erfolgt ein Druckausgleich einer unter Druck stehenden Getränkekartusche zunächst über eine begrenzte Volumenvergrößerung der Kartusche, d.h. ein Aufblähen der Kartusche, und dann über eine elastische Verformung des erfindungsgemäßen Dämpfungsmittels. Dadurch, dass die Getränkekartusche auf dem Kartuschenträger gehaltert wird, und der Innendruck zum Teil von dem erfindungsgemäßen Dämpfungsmittel aufgenommen wird, wird ein Aufblähen bis zum Aufplatzen verhindert.

Ein als elastisches Rückstellmittel ausgebildetes Dämpfungsmittel kann beispielsweise ein zwischen Kartuschenhalter und/oder Kartuschenträger und Getränkekartusche befindliches Elastomer sein. Ein erfindungsgemäßes Dämpfungsmittel kann auch eine Angel des Kartuschenhalters sein, deren Biegelänge verlängert ist. Alternativ oder zusätzlich ist ein erfindungsgemäßes Dämpfungsmittel auch durch die Verlängerung der Biegelänge der Rasthaken einer zwischen Basisplatte und Kartuschenträger ausgebildeten Rastverbindung erhältlich.

Im Folgenden wird ein Ausführungsbeispiel der vorliegenden Erfindung unter Bezugnahme auf die Figuren beschrieben, wobei die beschriebenen Merkmale nicht zwingend in der dargestellten Art zur Verwirklichung des erfindungsgemäß angestrebten Erfolgs erforderlich sind.

Es zeigen,
- Fig. 1: eine Seitenansicht eines geöffneten Brühkopfs ohne einer Kartuschenaufnahme,
- Fig. 2: eine Perspektivansicht einer Kartuschenaufnahme und
- Fig. 3: eine Seitenansicht eines geschlossenen Kartuschenträgers mit einer Getränkekartusche.

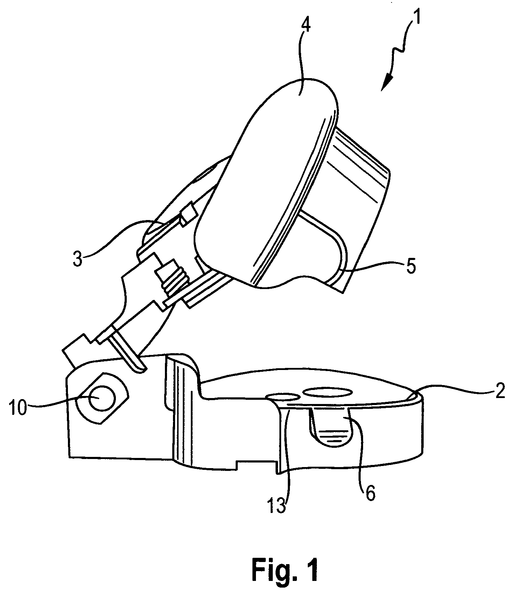

Entsprechend der Fig. 1, umfasst eine Brühkammer 1 eines auf Basis von formstabilen Getränkekartuschen arbeitenden Heißgetränkeautomaten eine Basisplatte 2, einen an der Basisplatte 2 angelenkten Deckel 3, und einen am Deckel 3 ausgebildeten Griff 4. Der Deckel 3 dreht sich um eine Achse zwischen einer geschlossenen und einer offenen Position, so dass eine von Basisplatte 2 und Deckel 3 gebildete Brühkammer 1 bequem geöffnet und geschlossen werden kann.

In der geschlossenen Position ist der Deckel 3 bezüglich der Basisplatte 2 parallel angeordnet und bildet die dichte Brühkammer 1. Der Griff 4 weist zwei gegenüber liegende Blockierklinken 5 auf, die die beiden gegenüber liegenden Blockierstifte 6 der Basisplatte 2 in Eingriff nehmen, wenn sich Deckel 3 und Griff 4 in geschlossener Position befinden. In einer geschlossenen Position ist demnach der Deckel 3 über die Anlenkung an der Basisplatte 2 und die beiden Blockierklinken 5 durch eine Drei-Punkt-Befestigung verriegelt. Während der Extraktion eines Getränkegrundstoff, d.h. während eines bestimmungsgemäßen Gebrauchs eines gattungsgemäßen Heißgetränkeautomaten, ist die Brühkammer 1, die die Kartuschenaufnahme 7 und eine Getränkekartusche 18 umschließt, verriegelt. Die Aufnahme 7 ist dabei an den beiden gegenüberliegenden Stiften 10 angelenkt und über die beiden gegenüberliegenden Hinterschneidungen 13 verrastet.

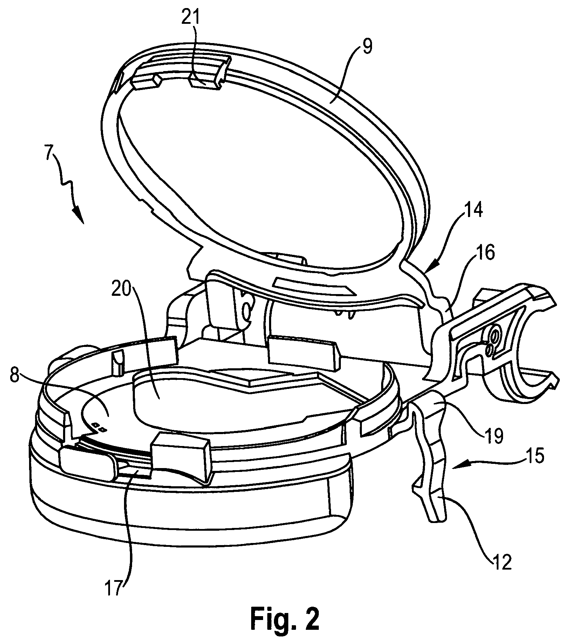

Fig. 2 zeigt eine Kartuschenaufnahme 7 in Alleinstellung. Die Kartuschenaufnahme 7 weist einen Kartuschenträger 8, einen ringförmigen Kartuschenhalter 9 und eine Verriegelungseinrichtung 17 auf. Die Verriegelung wird gemäß Figur 2 von einem Rasthaken und einem federbelasteten Schieber gebildet. Um die Kartuschenaufnahme 7 öffnen und schließen zu können, ist der Kartuschenhalter 9 über eine Angel 16 am Kartuschenträger 8 angelenkt und nach oben hin zu öffnen.

Mittels der Rasthaken 12 wird die Kartuschenaufnahme 7 lösbar über die Hinterschneidungen 13 an der Basisplatte 2 gehaltert. Die Halterung hat den Vorteil, dass sich bei einem missbräuchlichen Öffnen der Brühkammer bzw. einem Öffnen der Brühkammer in Folge einer Fehlbedienung, der im Inneren der Getränkekartusche 18 herrschende Druck nicht über eine Expansion, d.h. über ein unbegrenztes Aufblähen der Kartuschenfolie durch das im dem Kartuschenträger 8 ausgebildete Lesefenster 20 hindurch abbauen kann.

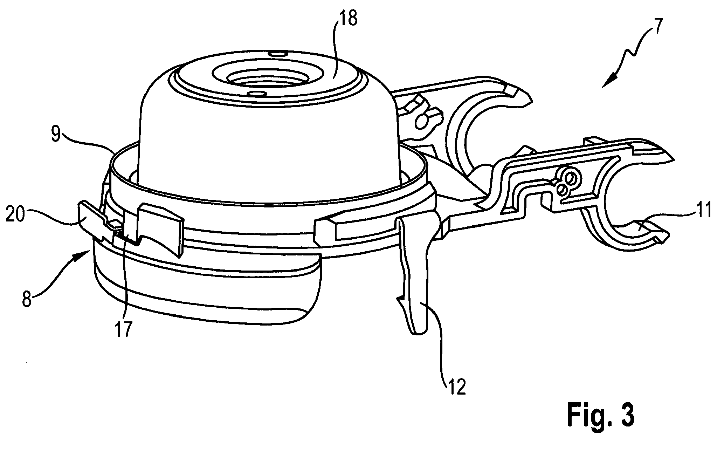

Die Kartuschenaufnahme 7 weist als elastische Rückstellmittel ausgebildete Dämpfungsmittel 14, 15 auf, die geeignet sind, den durch einen Brüh- und/oder Dampfdruck in der Getränkekartusche 18 (vgl. Fig. 3) erzeugten Innendruck auszugleichen.

Das Dämpfungsmittel 14 wird dadurch gebildet, dass die Biegelänge der Angel 16 des Kartuschenhalters 9 verlängert ist. Die Verlängerung resultiert aus einer geschwungenen Form der Angel 16. Ein Druckausgleich einer unter Druck stehenden Getränkekartusche 18 erfolgt dabei zunächst über eine begrenzte Volumenvergrößerung der Kartusche 18, d.h. ein Aufblähen der Kartusche 18, und dann über eine Verformung der Angel 16, dergestalt, dass diese in vertikaler Richtung dem Druck ausweicht. Die Verriegelung des Kartuschenhalters 9 mittels der Verriegelungseinrichtung 17 bietet dem Halter 9 im Verriegelungsbereich keine Ausweichmöglichkeit. Demgemäß befindet sich der Drehpunkt des Kartuschenhalters 9 im Bereich der Verriegelung 17, wodurch ein Druckausgleich über das Dämpfungsmittel 14 verstärkt wird.

Ein weiteres als elastisches Rückstellmittel ausgebildetes Dämpfungsmittel 15 wird dadurch gebildet, dass die Rasthaken 12 geschwungen sind und einen U-förmigen Abschnitt 19 aufweisen. Durch den U-förmigen Abschnitt 19 wird der theoretische Biegedrehpunkt der Rasthaken 12 nach außen verlagert. Ein weiterer Druckausgleich der Getränkekartusche 18 erfolgt dabei zunächst über eine Volumenvergrößerung der Kartusche, d.h. ein begrenztes Aufblähen Kartuschenfolie durch die Aussparung 20 hindurch, woraus zunächst ein Abheben des Kartuschenträgers 8 von der Basisplatte 2, und dann eine elastische Verformung der Rasthaken 12 resultiert, bis schließlich der Träger 8 in einem Winkel von etwa 5° von der Rastverbindung elastisch gestoppt wird. Figur 3 zeigt eine Kartuschenaufnahme 7 mit einer gehalterten Getränkekartusche 18. Die Kartuschenaufnahme 7 ist während des bestimmungsgemäßen Gebrauchs an zwei sich gegenüberliegenden Stiften 10 (vgl. Fig. 1) über die beiden Gabeln 11 unmittelbar an der Basisplatte 2 angelenkt. Zusätzlich ist sie über zwei Rastverbindungen, die von zwei sich an dem Träger 8 gegenüberliegende Rasthaken 12 und zwei sich an der Basisplatte 2 gegenüberliegenden Hinterschneidungen 13 (vgl. Fig. 1) gebildet werden, an der Basisplatte 2 lösbar gehaltert. Die Anlenkung über die Gabeln 11 wie auch über die lösbaren Rastverbindungen ermöglicht ein Entnehmen der Kartuschenaufnahme 7, beispielsweise zu Reinigungszwecken. Der ringförmige Kartuschenhalter 9 steht mit dem äußeren Rand der Kartusche 18 in Anlage und ist mittels der Verriegelungseinrichtung 17 am Kartuschenträger verriegelt. Zum Öffnen der Verriegelungseinrichtung 17 wird der federbelastete Schieber 20 betätigt, der dann die Rastnase 21 (vgl. Fig. 2) freigibt.

Die Erfindung eignet sich insbesondere für Getränkekartuschen aus einer formstabilen Hartschale, die mit einem folienartigen Deckel, beispielsweise einem Deckel aus einer Aluminiumfolie oder PE-Folie, verschlossen, insbesondere verklebt oder verschweißt ist.

### Bezugszeichenliste

- 1: Brühkopf
- 2: Basisplatte
- 3: Deckel
- 4: Griff
- 5: Blockierklinken
- 6: Blockierstifte
- 7: Kartuschenaufnahme
- 8: Kartuschenträger
- 9: Kartuschenhalter
- 10: Stift
- 11: Gabel
- 12: Rasthaken
- 13: Hinterschneidung
- 14: Dämpfungsmittel
- 15: Dämpfungsmittel
- 16: Angel
- 17: Verriegelungseinrichtung
- 18: Getränkekartusche
- 19: U-förmigen Abschnitt
- 20: Schieber
- 21: Rastnase

## Patentansprüche

1. Kartuschenaufnahme für eine Brühkammer (1) eines auf Basis von formstabilen Getränkekartuschen (18) arbeitenden Heißgetränkeautomaten, mit einem Kartuschenträger (8), einem Kartuschenhalter (9) und einer Verriegelungseinrichtung (17) zum Haltern der Getränkekartusche (18) auf dem Kartuschenträger (8), wobei die Kartuschenaufnahme (7) zumindest ein Dämpfungsmittel (14, 15) aufweist, das geeignet ist, den durch einen Brüh- und/oder Dampfdruck in der Getränkekartusche (18) erzeugten Innendruck auszugleichen, **dadurch gekennzeichnet, dass** der Kartuschenhalter (9) ringförmig ausgebildet und über eine Angel (16) am Kartuschenträger (8) angelenkt ist und dass die Biegelänge der Angel (16) des Kartuschenhalters (9) verlängert, insbesondere geschwungen ist.

2. Kartuschenaufnahme nach Anspruch 1, **dadurch gekennzeichnet, dass** der Kartuschenträger (8) Rasthaken (12) aufweist.

3. Kartuschenaufnahme nach einem der Ansprüche 1 oder 2, **dadurch gekennzeichnet, dass** die Rasthaken (12) geschwungen sind und einen U-förmigen Abschnitt (19) aufweisen.

4. Kartuschenaufnahme nach einem der vorstehenden Ansprüche, **dadurch gekennzeichnet, dass** die Aufnahme (7) an zwei sich gegenüberliegenden Stiften (10) über die beiden Gabeln (11) an der Basisplatte (2) angelenkt und/oder lösbar an der Basisplatte (2) gehaltert ist.

5. Kartuschenaufnahme nach einem der vorstehenden Ansprüche, **dadurch gekennzeichnet, dass** die Verriegelungseinrichtung (17) und das zumindest eine Dämpfungsmittel (14) in etwa diametral angeordnet sind.

6. Brühkammer (1) eines auf Basis von formstabilen Getränkekartuschen (18) arbeitenden Heißgetränkeautomaten, umfassend eine Kartuschenaufnahme (7) nach einem der Ansprüche 1 bis 5.

## Claims

1. Cartridge receptacle for a brewing chamber (1) of a hot beverage machine operating on the basis of dimensionally stable beverage cartridges (18), having a cartridge carrier (8), a cartridge holder (9) and a locking device (17) for holding the beverage cartridge (18) onto the cartridge carrier (8), wherein the cartridge receptacle (7) has at least one pressure absorbing means (14, 15) which is suitable for balancing out the internal pressure produced in the beverage cartridge (18) by the pressure from brewing and/or from steam, **characterised in that** the cartridge holder (9) is constructed with a ring shape and is hinged onto the cartridge carrier (8) by a hinge (16) and the elastic section of the hinge (16) on the cartridge holder (9) is lengthened, in particular is curved.

2. Cartridge receptacle according to claim 1, **characterised in that** the cartridge carrier (8) has catch hooks (12).

3. Cartridge receptacle according to claim 1 or 2, **characterised in that** the catch hooks (12) are curved and have a U-shaped section (19).

4. Cartridge receptacle according to one of the preceding claims, **characterised in that** the receptacle (7) is hinged onto two pins (10) on opposite sides of the base plate (2) by the two forks (11) and/or is held onto the base plate (2) in such a way that it can be released.

5. Cartridge receptacle according to one of the preceding claims, **characterised in that** the locking device (17) and the at least one pressure absorbing means (14) are arranged roughly diametrically.

6. Brewing chamber (1) of a hot beverage machine operating on the basis of dimensionally stable beverage cartridges (18), incorporating a cartridge receptacle (7) according to one of claims 1 to 5.

## Revendications

1. Logement de cartouche pour une chambre d'infusion (1) d'un distributeur automatique de boissons chaudes fonctionnant à base de cartouches de boisson (18) de forme stable, comprenant un support de cartouche (8), un porte-cartouche (9) et un dispositif de verrouillage (17) pour fixer la cartouche de boisson (18) sur le support de cartouche (8), le logement de cartouche (7) présentant au moins un moyen d'amortissement (14, 15) qui est adapté pour compenser la pression interne générée par une pression d'infusion et/ou de vapeur dans la cartouche de boisson (18), **caractérisé en ce que** le porte-cartouche (9) est de forme annulaire et articulé au support de cartouche (8) par l'intermédiaire d'une charnière (16) et **en ce que** la longueur de flexion de la charnière (16) du porte-cartouche (9) est prolongée, en particulier courbée.

2. Logement de cartouche selon la revendication 1, **caractérisé en ce que** le support de cartouche (8) présente des crochets d'arrêt (12).

3. Logement de cartouche selon l'une des revendications 1 ou 2, **caractérisé en ce que** les crochets d'arrêt (12) sont courbés et présentent une partie en forme de U (19).

4. Logement de cartouche selon l'une des revendications précédentes, **caractérisé en ce que** le logement (7) est articulé à la plaque de base (2) au niveau de deux tiges (10) se faisant face par l'intermédiaire des deux fourches (11) et/ou fixé de manière amovible à la plaque de base (2).

5. Logement de cartouche selon l'une des revendications précédentes, **caractérisé en ce que** le dispositif de verrouillage (17) et le au moins un moyen d'amortissement (14) sont disposés sensiblement diamétralement.

6. Chambre d'infusion (1) d'un distributeur automatique de boissons chaudes fonctionnant à base de cartouches de boisson (18) de forme stable, comprenant un logement de cartouche (7) selon l'une des revendications 1 à 5.
